# EUROPEAN PATENT SPECIFICATION

(11) **EP 2 544 083 B1**
(45) Date of publication and mention of the grant of the patent: **29.08.2018**
(21) Application number: 12151011.9
(22) Date of filing: 13.01.2012
(51) Int. Cl.: G06F 3/0488, G06F 3/023, G06F 3/01

(54) **Apparatus and method for inputting character on touch screen**
Vorrichtung und Verfahren zur Eingabe von Zeichen auf einem Berührungsbildschirm
Appareil et procédé d'entrée de caractères sur un écran tactile

(30) Priority: 06.07.2011 KR 20110066846
(43) Date of publication of application: 09.01.2013
(73) Proprietor: Samsung Electronics Co., Ltd., Suwon-si, Gyeonggi-do, 443-742 (KR)
(72) Inventor: Koh, Myung-Geun, 442-742 Gyeonggi-do (KR); Kwon, Tae-Youn, 442-742 Gyeonggi-do (KR); Min, Yi-Kyu, 442-742 Gyeonggi-do (KR); Lee, Kyung-Goo, 442-742 Gyeonggi-do (KR); Son, Byoung-Il, 442-742 Gyeonggi-do (KR)
(74) Representative: Nederlandsch Octrooibureau

(56) References cited:
- US-A- 6 094 197
- US-A1- 2008 291 171
- US-A1- 2009 322 688
- US-A1- 2010 110 030

## Description

### BACKGROUND OF THE INVENTION

### 1. Field of the Invention

The present invention relates to input devices and more particularly to an apparatus and method for inputting a character corresponding to a user's gesture.

### 2. Description of the Related Art

A character inputting apparatus having a touch screen may provide a keypad for allowing a user to input a character. The keypad is partitioned into a plurality of regions, each of which may include at least one of characters in English, Korean, Chinese, and Japanese, numeric characters, and/or special characters. When a user selects a region from among the plurality of regions, the character inputting apparatus may display a character corresponding to the user selected region on the touch screen.

The character inputting apparatus may provide a plurality of keypads for allowing a user to input various types of characters. Each of the plurality of keypads may be selectively displayed on the touch screen. For example, when an English keypad is displayed on the touch screen, a Korean keypad may be hidden. When one of the plurality of keypads is displayed on the touch screen, the user may select a switch button to display another one of the plurality of keypads on the touch screen.

The user may input a character included in each keypad by using the plurality of keypads which can be displayed on the touch screen. For example, the user may, after inputting a Korean character on a Korean keypad, select a keypad switch button and input a numeric character on a numeric character keypad. However, in switching between the Korean keypad and the numeric character keypad, a time for switching among the different keypads is required. This switching time increases the time needed to complete inputting a message and, also, is inconvenient for the user. Therefore there is a need for a method allowing a user to rapidly input characters of different keypads.

US 6 094 197 describes a touch panel with displayed keypad. By dragging a letter upwards, an upper case letter can be displayed. By dragging in alternative directions, other operations may be performed on the selected character of the displayed keypad

US 2010/110 030 A1 discloses a touch panel with a keypad capable of displaying characters in multiple languages. If a key is dragged outside of the key area an alternative character is displayed

US 2009/322 688 A1 discloses a touch panel with a keypad which can maps several characters on one key region on the screen. When a key region is pressed, an enlarged version is shown.

### SUMMARY OF THE INVENTION

Accordingly, an aspect of the present invention is to provide a method for inputting a character of each keypad when characters of different keypads are input in a character inputting apparatus having a touch screen.

According to an aspect of the present invention, there is provided a character inputting method as defined in appended claim 1. According to another aspect of the present invention, there is provided a character inputting apparatus as defined in appended claim 6. According to another aspect of the present invention, there is provided a non-transitory computer-readable recording medium as defined in appended claim 13.

### BRIEF DESCRIPTION OF THE DRAWINGS

The above and other features and advantages of an exemplary embodiment of the present invention will be more apparent from the following detailed description taken in conjunction with the accompanying drawings, in which:
FIG. 1 is a block diagram of a character inputting apparatus according to an embodiment of the present invention;
FIG. 2 shows information displayed on a touch screen of a character inputting apparatus according to an embodiment of the present invention;
FIG. 3 shows keypads provided in a character inputting apparatus according to an embodiment of the present invention;
FIG. 4 shows keypads provided in a character inputting apparatus according to another embodiment of the present invention;
FIG. 5 shows a user's gesture on a touch screen of a character inputting apparatus according to an embodiment of the present invention;
FIG. 6 shows a user's gesture on a touch screen of a character inputting apparatus according to another embodiment of the present invention;
FIG. 7 shows a user's gesture on a touch screen of a character inputting apparatus according to another embodiment of the present invention;
FIG. 8 shows a keypad provided in a character inputting apparatus according to an embodiment of the present invention;
FIG. 9 is a flowchart illustrating an operation of a character inputting apparatus according to an embodiment of the present invention;
FIG. 10 is a flowchart illustrating an operation of a character inputting apparatus according to another embodiment of the present invention;
FIG. 11 is a flowchart illustrating an operation of a character inputting apparatus according to another embodiment of the present invention; and
FIG. 12 is a block diagram of a processor of a character inputting apparatus according to an embodiment of the present invention.

### DETAILED DESCRIPTION OF THE INVENTION

A method for producing and using the present invention will be described in detail. While various embodiments of the present invention will be described below, such embodiments are not intended to limit the present invention unless specified in the appending claims.

User gestures are actions for displaying or controlling information on a touch screen, for example, by using a stylus, or more typically, fingers (especially, index fingers) or thumbs of the left and right hands. User gestures may include a touch, a long touch, release of a touch, a drag of a touch, etc. A touch may refer to an action which maintains a touch for a predetermined threshold time, and a long touch may refer to an action which maintains a touch longer than the predetermined threshold time. In particular, a drag of a touch may refer to a user's gesture of touching a region on a touch screen, dragging the touch in a particular direction while maintaining the touch, and then releasing the touch.

A touch may mean a state in which a character inputting apparatus senses that a user's finger or thumb touches the touch screen. For example, when a capacitive-type technique or a surface acoustic wave-type technique is used for a touch sensor, the character inputting apparatus may indicate that the finger or thumb touches the touch screen even if it does not actually touch the touch screen (i.e., closely approaching the touch screen - proximity sensor).

It will be understood by those of ordinary skill in the art that in the present invention, examples of the character inputting apparatus capable of inputting a character through a touch screen may include a tablet, a Portable Multimedia Player (PMP), a Personal Digital Assistant (PDA), a smart phone, a cellular phone, a navigation terminal, an electronic dictionary, a digital frame, and so forth.

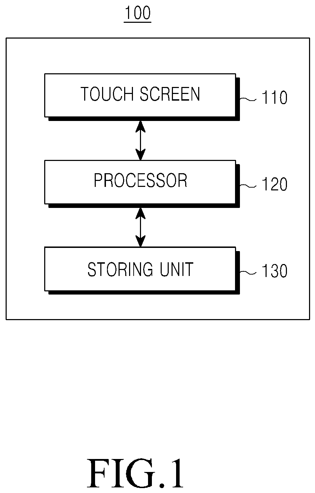

Referring to FIG. 1, a character inputting apparatus 100 may include a touch screen 110, a processor 120, and a storing unit 130.

The touch screen 110 may include a display panel and a touch pad. The display panel may use, for example, a Plasma Display Panel (PDP), an Electronic Paper Display (EPD), a Liquid Crystal Display (LCD), a Light-emitting Polymer Display (LPD), an Organic Light-Emitting Diode (OLED), an Active-Matrix Organic Light-Emitting Diode (AMOLED), or an application thereof.

The touch pad may be attached on a side of the display panel to sense a touch generated on the surface of the touch pad and detect coordinates, i.e., a location value, of a touch-generated region. The touch pad may operate according to a resistive scheme, a capacitive scheme, an ultrasonic wave scheme, an optical sensor scheme, an electromagnetic induction scheme, etc. For example, the touch pad using the optical sensor scheme is structured such that a plurality of light-emitting elements and a plurality of light-receiving elements are disposed around a display region, the light-emitting element emits light such as an infrared ray, which then passes the display region to be received by an opposite light-receiving element. The touch pad may include a separate circuit for controlling the driving of the display region and optical elements (the light-emitting elements and the light-receiving elements). In the touch pad using the optical sensor scheme, light-emitting elements and their opposite light-receiving elements are arranged at predetermined intervals and the coordinate values of a light-receiving element corresponding to each light-emitting element is previously set, such that upon generation of a user's touch on the display region, coordinate values of a blocked light is read to detect the touched positioned and the coordinate values are sent to the processor 120.

Under the touch screen 110 may be disposed the processors 120 and the storing unit 130.

The storing unit 130 may store overall programs necessary for operations according to various embodiments of the present invention and user data. The storing unit 130 may use at least one of a volatile memory and a non-volatile memory. For example, the non-volatile memory may be a Read Only Memory (ROM), an Electrically Erasable Programmable Read-Only Memory (EEPROM), a flash memory, or the like, and the volatile memory may be a Dynamic Random Access Memory (DRAM), a Static Random Access Memory (SRAM), or the like.

At least a part of the storing unit 130 may be removable from the character inputting apparatus 100. The removable storing unit 130 may be, for example, a Compact Flash (CF) card, a Secure Digital (SD) card, a Smart Media (SM) card, a Multimedia Card (MMC), a memory stick, etc.

The processor 120 controls the overall operation of each component of the character inputting apparatus 100. For example, methods necessary for operations according to various embodiments of the present invention to be described below may be stored in the form of programs in the memory. Alternatively, some of those methods may be stored in the form of programs in the memory, and some others may be implemented with hardware (circuit or dedicated circuit). The processor 120 reads and interprets at least some of programs held in the storing unit 130, and in response to a user's gesture of touching one of a plurality of regions partitioning a first keypad on the touch screen 110, dragging a touch while maintaining the touch, and releasing the touch in a position different from the touched region, the processor 120 then extracts a character of a second keypad, which is located at a region corresponding to the touched region of the first keypad, among a plurality of regions partitioning the second keypad, and displays the extracted character on the touch screen 110.

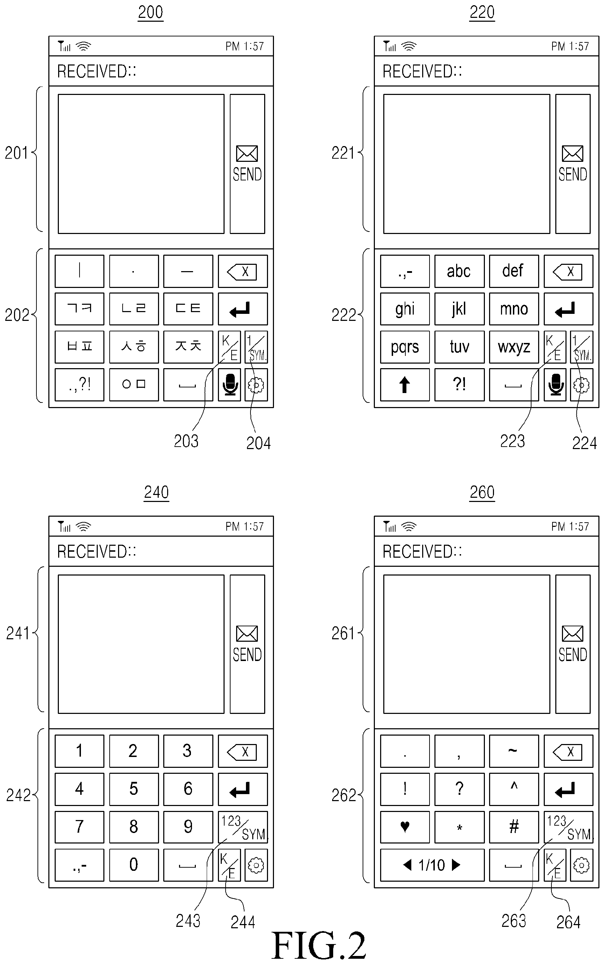

Referring to FIG. 2, a diagram 200 shows a character input window 201 and a Korean keypad 202 provided by the character inputting apparatus 100. A diagram 220 shows a character inputting window 221 and an English keypad 222 provided by the character inputting apparatus 100. A diagram 240 shows a character inputting window 241 and a numeric character keypad 242 provided by the character inputting apparatus 100. A diagram 260 shows a character inputting window 261 and a special character keypad 262 provided by the character inputting apparatus 100.

The character inputting apparatus 100 may include keypad switch buttons 203 and 204, 223 and 224, 243 and 244, 263 and 264 for switch between the plurality of keypads 202, 222, 242, 262. For example, the user may select a Korean/English keypad switch button 203 to switch the Korean keypad 202 to the English Keypad 222. The user may select an English/Korean keypad switch button 223 to switch the English keypad 222 to the Korean keypad 202. The user may select a numeric/special character keypad switch button 243 to switch the numeric character keypad 242 to the special character keypad 262. The user may select a special character/numeric character keypad switch button 263 to switch the special character keypad 262 to the numeric character keypad 242.

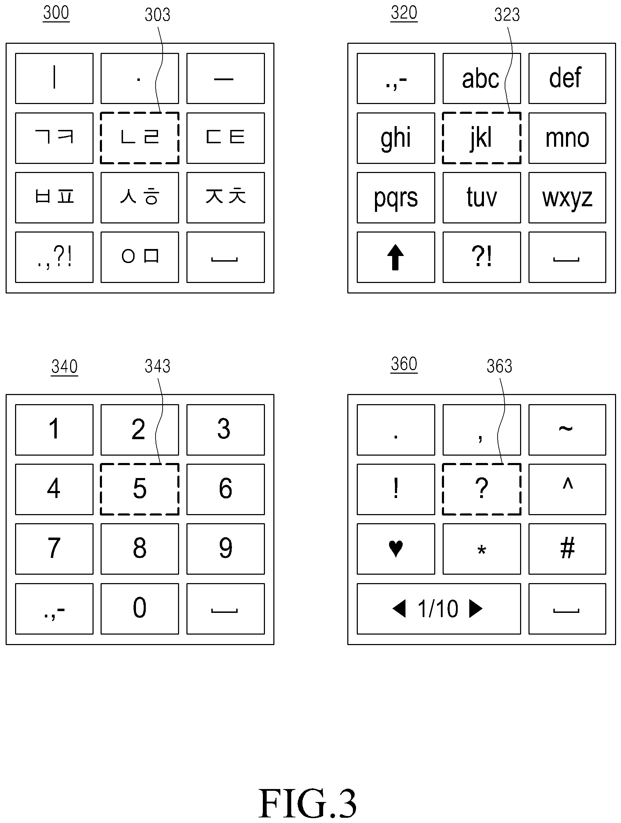

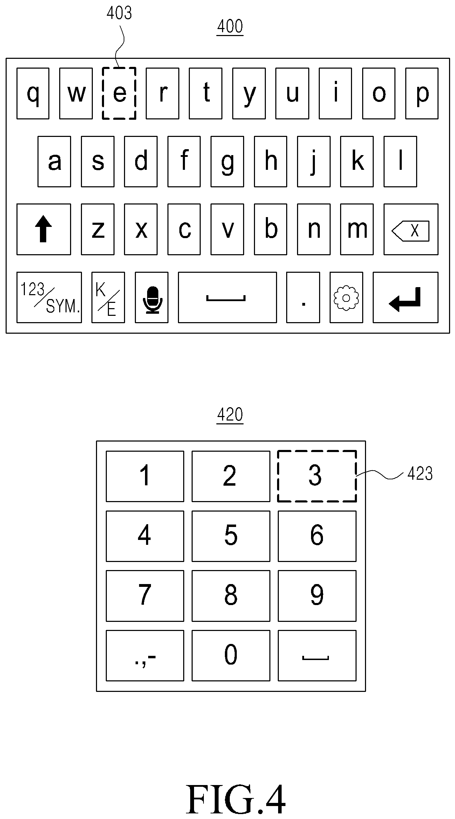

Referring to FIGs. 3 and 4, a plurality of keypads may have regions corresponding to one another. Herein, each keypad is partitioned into a plurality of regions, each of which may display at least one character.

FIG. 3 shows examples of a Korean keypad 300, an English keypad 320, a numeric character keypad 340, and a special character keypad 360. In FIG. 3, a region of each keypad may correspond to a region of a different keypad. Regions corresponding to each other may be disposed in the same position on the touch screen or may have the same array value. For example, a region 303 of the Korean keypad 300, a region 323 of the English keypad 320, a region 343 of the numeric character keypad 340, and a region 363 of the special character keypad 360 may correspond to one another. In this case, each of those regions may be disposed in the same position on the touch screen or may have the same array value (2, 2).

FIG. 4 shows examples of a QWERTY English keypad 400 and a numeric character keypad 420. In FIG. 4, a region of each keypad may correspond to a region of a different keypad. In this case, regions corresponding to each other may comply with a scheme which is preset in the character inputting apparatus 100. For example, 'q', 'w', 'e', 'r', 't', 'y', 'u', 'i', 'o', and 'p' of the QWERTY English keypad 400 may correspond to '1', '2', '3', '4', '5', '6', '7', '8', '9', and '0' of the numeric character keypad 420, respectively. For example, a region 403 of the QWERTY English keypad 400 and a region 423 of the numeric character keypad 420 may correspond to each other.

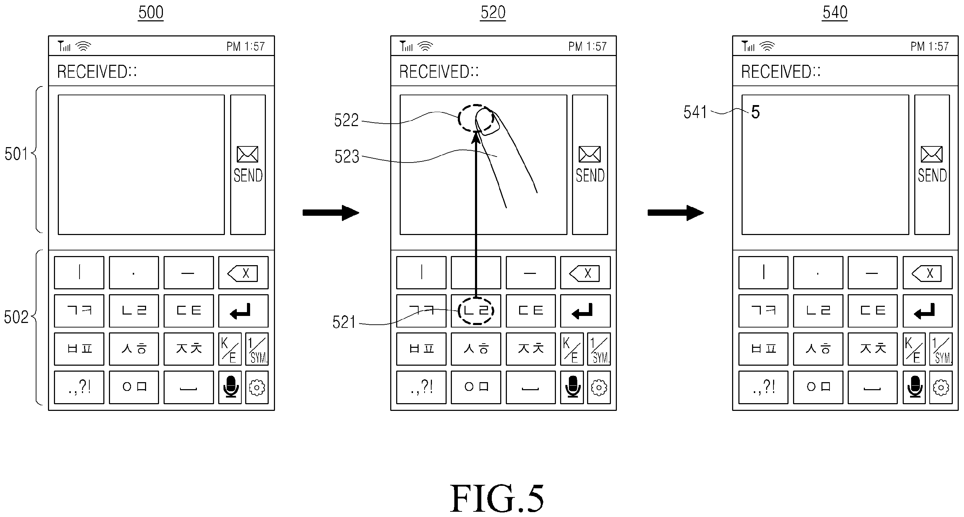

Referring to FIG. 5, diagram 500 illustrates a screen prior to input of a user's gesture, diagram 520 illustrates a screen during input of the user's gesture, and diagram 540 illustrates a screen after input of the user's gesture.

As shown in the diagram 500 of FIG. 5, the character inputting apparatus 100 may display, among a plurality of keypads, a first keypad (e.g., a Korean keypad, an English keypad, a Japanese keypad, or a Chinese keypad) 502 on the touch screen while hiding a second keypad (e.g., a numeric character keypad or a special character keypad). Herein, each of the first keypad 502 and the hidden second keypad is partitioned into a plurality of regions, each of which may include a character. When a user touches one of the plurality of partitioned regions of the first keypad 502, a character input window 501 may display a character of the first keypad 502, which corresponds to the touched region.

As shown in diagram 520 of FIG. 5, the character inputting apparatus 100 may sense a user's gesture 523 of touching a region 521 among the plurality of regions of the first keypad 502, dragging the touch while maintaining the touch, and releasing the touch in a region 522 different from the touched region to display a character of a hidden second keypad. The touch-released region 522 is outside of a region where the first keypad 502 is displayed, for example, within the character input window 501.

As shown in diagram 540 of FIG. 5, in response to the user's gesture 523 which ends with the release of the touch in region 522, the character inputting apparatus 100 may extract a character of the region, which corresponds to the touched region 521 of the first keypad 502 associated with the hidden second keypad. For example, if the user touches the region 521 including a character ' 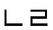 on the first keypad 502, drags the touch, and releases the touch on the character input window 501, the character inputting apparatus 100 may extract a numeric character '5' 541, which is associated with a corresponding region of the second keypad. That is, the character "5" in the hidden keypad corresponds to the region 521 of the character ' 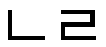 ' of the first keypad 502. Thus, the extracted character '5' 541 is displayed on the character input window 501. In this case, the extracted character 541 may be displayed on a particular region of the character input window 501 or may be displayed in front of, or at the rear of, a horizontal or vertical prompt icon of the character input window 501.

If the character inputting apparatus 100 senses the touch-released region within the display region of the first keypad 502 in the diagram 540 of FIG. 5, the character inputting apparatus 100 extracts a character of a region of the first keypad 502, which corresponds to the touch-released region, and displays the extracted character on the touch screen. For example, the character inputting apparatus 100 may display the character of the first keypad 502, ' 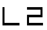 ' on the character input window 501.

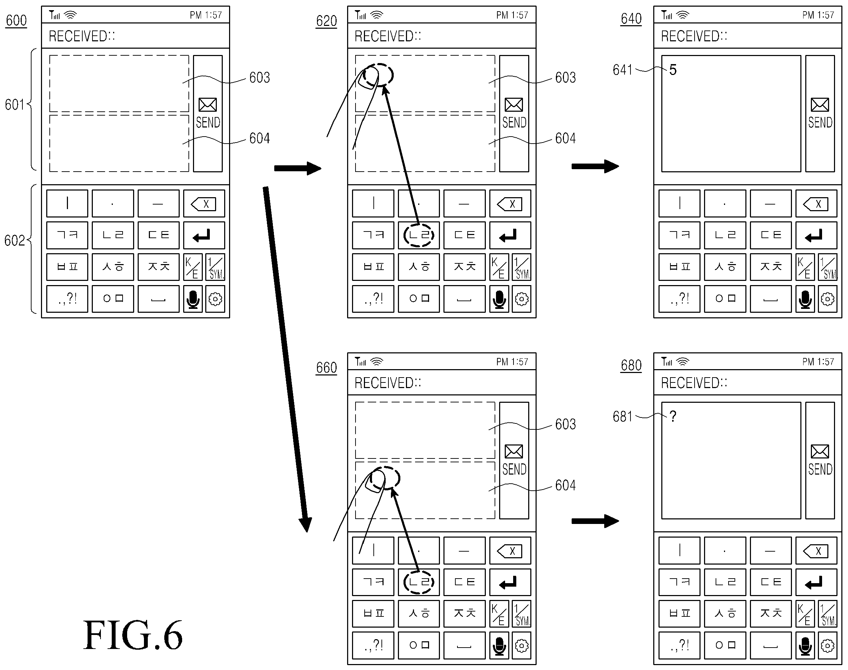

A diagram 600 of FIG. 6 shows a screen prior to input provided by a user's gesture. In the diagram 600 of FIG. 6, the character inputting apparatus 100 may include a first keypad 602 (e.g., a Korean keypad) and a character input window 601. The character input window 601 may be divided into a region 603 for providing a character of a hidden second keypad (e.g., a numeric character keypad) and a region 604 for providing a character of a third keypad (e.g., a special character keypad). Herein, the regions 603 and 604 may be divided into a further number of regions according to the number of hidden keypads.

Diagram 620 of FIG. 6 shows a screen during input of a user's gesture. In the diagram 620 of FIG. 6, if the user touches one of the plurality of regions partitioning the first keypad 602, drags and releases the touch in a first region 603 which is different from the touched region, then the character inputting apparatus 100 may extract, from the storing unit 130, a character 641 associated with a region among a plurality of regions partitioning a hidden second keypad that corresponds to the touched region of the first keypad 602.

Diagram 640 of FIG. 6 shows a screen on which the character extracted by the character inputting apparatus 100 is displayed. For example, the extracted character may be displayed on a character input window 601.

Diagram 660 of FIG. 6 shows a screen according to another process of inputting a user's gesture. In diagram 660 of FIG. 6, if the user touches one of a plurality of regions partitioning a first keypad, drags releases the touch on region 604, the character inputting apparatus 100 may extract, from the storing unit 130, a character 681 ("?"), which is associated with a region among a plurality of regions partitioning a hidden third keypad that corresponds to the touched region of the first keypad. (see Figure 3).

Diagram 680 of FIG. 6 shows a screen on which a character extracted by the character inputting apparatus 100 is displayed. For example, the extracted character may be displayed on the character input window 601.

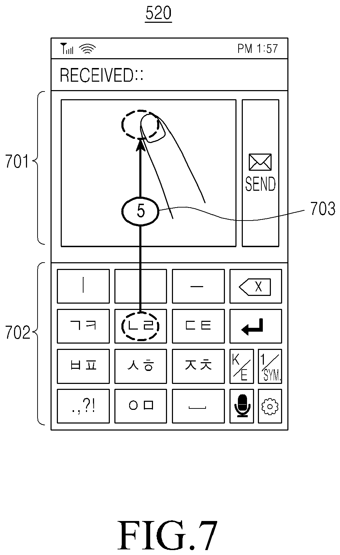

As shown in FIG. 7, when the user touches one of a plurality of regions partitioning a first keypad 702 and drags the touch into region 701, the character inputting apparatus 100 may display, on the touch screen, a character 703 of a region of a hidden second keypad which corresponds to the touched region of the first keypad 702. For example, when the user touches ' 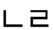 ' of the first keypad 702 and drags the touch to a character input window 701, a character '5' 703 of the hidden second keypad corresponding to ' 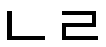 ' may be displayed on the touch screen (see Figure 3). In particular, the character 703 of the hidden second keypad may start being displayed when the user's drag of the touch enters the character input window 701. That is, character "5" of the hidden second keypad is in a position within the second keypad that corresponds to the touched region (i.e., character ' 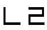 ') in the first keypad.

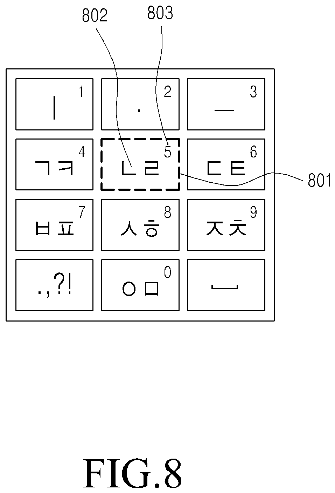

As shown in FIG. 8, the character inputting apparatus 100, when displaying a first keypad, may also display, on at least one of a plurality of regions partitioning the first keypad, a character of a hidden second keypad which corresponds to the region of the first keypad. For example, on a region 801 of the first keypad may be displayed characters ' 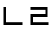 ' of the first keypad and a numeric character '5' of the second keypad together.

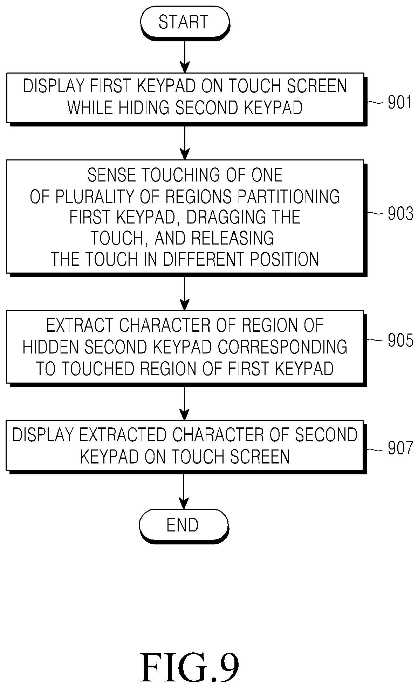

Referring to FIG. 9, in step 901, the character inputting apparatus 100 may display a first keypad on a touch screen while hiding a second keypad as shown in the diagram 500 of FIG. 5.

As shown in the diagram 520 of FIG. 5, the character inputting apparatus 100 may sense a user's gesture of touching one of a plurality of regions partitioning the first keypad, dragging and releasing the touch to a position that is different from the touched region in step 903. The touch-released region may be outside a region of the touch screen where the first keypad is displayed. For example, the touch-released region may be a character input window.

In step 905, the character inputting apparatus 100 may extract a character associated with a region of the hidden second keypad that corresponds to the touched region of the first keypad in response to the user's gesture. If the touch-released region is within the region where the first keypad is displayed, the character inputting apparatus 100 may extract a character of the touch-released region of the first keypad.

In step 907, the character inputting apparatus 100 may display the extracted character on the touch screen as shown in the diagram 540 of FIG. 5.

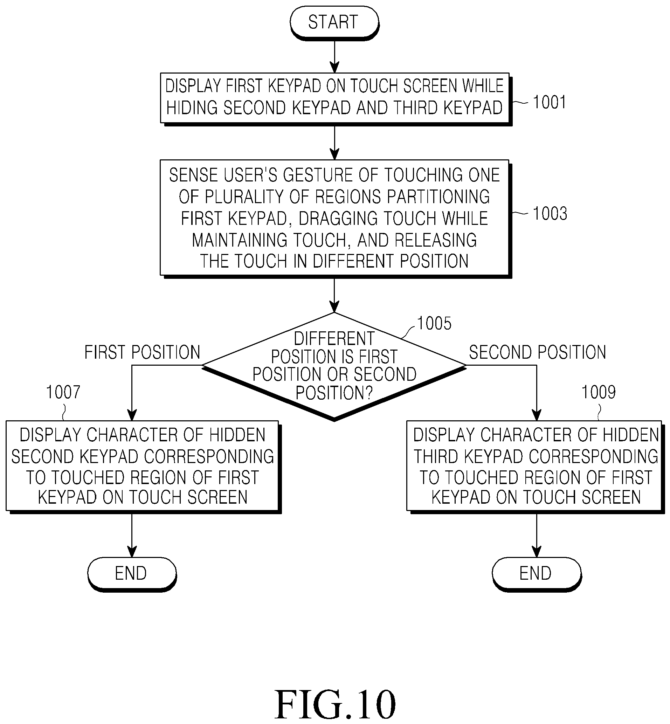

Referring to FIG. 10, in step 1001, the character inputting apparatus 100 may display a first keypad on a touch screen while hiding a second keypad and a third keypad as shown in the diagram 600 of FIG. 6.

In step 1003, as shown in the diagram 620 or 660 of FIG. 6, the character inputting apparatus 100 may sense a user's gesture of touching one of a plurality of regions partitioning the first keypad, dragging and releasing the touch in a position different from the touched region. In this case, the character inputting apparatus 100 may determine whether the touch-released region is in a first position or a second position in step 1005.

If determining that the user's gesture releases the touch in the first position, the character inputting apparatus 100 may display a character associated with a region of the hidden second keypad that corresponds to the touched region of the first keypad, as shown in the diagram 640 of FIG. 6, in step 1007. On the other hand, if determining that the user's gesture releases the touch in the second position, the character inputting apparatus 100 may display a character associated with a region of the hidden third keypad that corresponds to the touched region of the first keypad, as shown in the diagram 680 of FIG. 6, in step 1009.

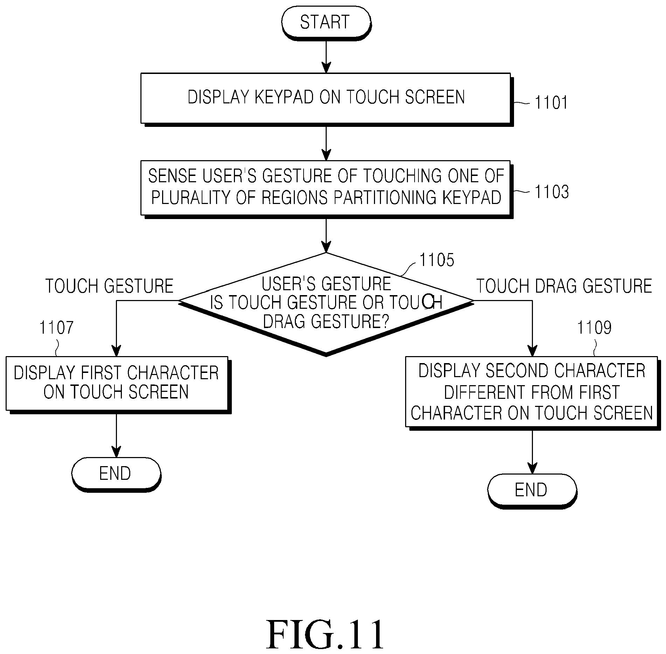

Referring to FIG. 11, the character inputting apparatus 100 may display a keypad on a touch screen in step 1101.

In step 1103, the character inputting apparatus 100 may sense a user's gesture of touching one of a plurality of regions partitioning the keypad.

In step 1105, the character inputting apparatus 100 may determine a type of the user's gesture. If the character inputting apparatus 100 determines that the user's gesture is a touch gesture, the user may display a first character on the touch screen in step 1107. On the other hand, if the character inputting apparatus 100 determines that the user's gesture is a touch drag gesture, the user may display a second character which is different from the first character on the touch screen in step 1109.

The following tables compare a time spent in switching a first keypad to a second keypad (e.g., a numeric character keypad) and inputting a character of the second keypad by using a conventional Korean/numeric character keypad switch button with a time inputting a character of the second keypad by using a scheme according to the present invention, when the character inputting apparatus 100 displays the first keypad (e.g., a Korean character keypad) of a 3x4 keypad type and a QWERTY keypad type, respectively, while hiding the second keypad.

**[Table 1] 3x4 Keypad Type**

| Input character of second keypad when first keypad is displayed | Time spent in displaying character of second keypad by using Korean/numeric character keypad switch button | Time spent in displaying character of second keypad according to present invention |
|---|---|---|
| Input '1' of second keypad | 600ms | 100ms |
| Input '2' of second keypad | 600ms | 100ms |
| Input '3' of second keypad | 600ms | 100ms |
| Input '4' of second keypad | 600ms | 130ms |
| Input '5' of second keypad | 600ms | 130ms |
| Input '6' of second keypad | 600ms | 130ms |
| Input '7' of second keypad | 600ms | 160ms |
| Input '8' of second keypad | 600ms | 160ms |
| Input '9' of second keypad | 600ms | 160ms |
| Input '0' of second keypad | 600ms | 190ms |

**[Table 2] QWERTY Keypad Type**

| Input character of second keypad when first keypad is displayed | Time spent in displaying character of second keypad by using Korean/numeric character keypad switch button | Time spent in displaying character of second keypad according to present invention |
|---|---|---|
| Input '1' of second keypad | 600ms | 100ms |
| Input '2' of second keypad | 600ms | 100ms |
| Input '3' of second keypad | 600ms | 100ms |
| Input '4' of second keypad | 600ms | 100ms |
| Input '5' of second keypad | 600ms | 100ms |
| Input '6' of second keypad | 600ms | 100ms |
| Input '7' of second keypad | 600ms | 100ms |
| Input '8' of second keypad | 600ms | 100ms |
| Input '9' of second keypad | 600ms | 100ms |
| Input '0' of second keypad | 600ms | 100ms |

Comparing measurement results according to keypad types in Table 1 and Table 2, for the first keypad of the 3x4 keypad type, a character inputting scheme for the second keypad according to the present invention is faster by about 4.7 times than that using a conventional keypad switch button. For the first keypad of the QWERTY keypad type, a character inputting scheme for the second keypad according to the present invention is faster by about 6 times than that using a conventional keypad switch button.

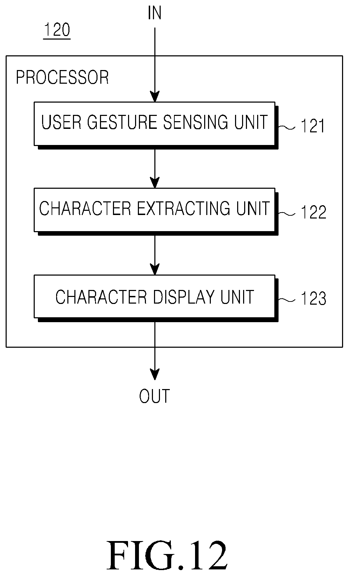

Referring to FIG. 12, the processor 120 may include a user gesture sensing unit 121 (proximity sensor), a character extracting unit 122, and a character display unit 123.

In an embodiment of the present invention, the touch screen 110 may display a first keypad while hiding a second keypad.

The user gesture sensing unit 121 may sense a user's gesture of touching one of a plurality of regions partitioning the first keypad, dragging and releasing the touch in a position that is different from the touched region. The touch-released region may be outside a region of the touch screen where the first keypad is displayed.

The character extracting unit 122 may extract, from the storing unit 130, a character associated with a region of the hidden second keypad that corresponds to the touched region of the first keypad in response to the user's gesture. If the touch-released region is within the region where the first keypad is displayed, the character extracting unit 122 extracts a character corresponding to the the touched region of the first keypad.

The character display unit 123 may display the character of the second keypad or the first keypad, extracted by the character extracting unit 122, on the touch screen.

The character inputting method of the character inputting apparatus according to the embodiment of the present invention may be embodied as a program command which can be executed by various computer means (computer, processor, dedicated hardware) and may be recorded on a tangible computer-readable medium. The computer-readable medium may include a program command, a data file, a data structure, and so forth alone or in combination thereof. The program command recorded on the medium may be one specially designed and configured for the present invention, or may be one well known and available to those of ordinary skill in the computer software field. Examples of the computer-readable medium may include hardware devices specially configured to store and execute the program command, such as a hard disk, floppy disk, a magnetic medium like a magnetic tape, an optical medium like a Compact Disc-Read Only Memory (CD-ROM), a Digital Versatile Disc (DVD), etc., a magneto-optical medium like a floptical disk, a Read Only Memory (ROM), a Random Access Memory (RAM), a flash memory, and so forth. Examples of the program command may include not only a mechanical language code generated by a compiler, but also a high-level language code executable by a computer using an interpreter. The aforementioned hardware devices may be configured to operate as one or more software modules to execute operations according to the present invention, or vice versa.

As is apparent from the foregoing description, the user can rapidly input a character of each keypad of the character inputting apparatus, which selectively provides different keypads. In particular, when the user continuously input characters of different keypads, the character inputting apparatus can shorten a total character inputting time.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium and to be stored on a local recording medium, so that the methods described herein can be rendered in such software that is stored on the tangible or non-transitory recording medium using a general purpose computer, or a special processor or in programmable or dedicated hardware, such as an ASIC or FPGA. As would be understood in the art, the computer, the processor, microprocessor, controller or the programmable hardware include memory components, e.g., RAM, ROM, Flash, etc. that may store or receive software or computer code that when accessed may be executed by the computer, processor, microprocessor, controller or hardware to implement the processing methods described herein. In addition, it would be recognized that when a general purpose computer accesses code for implementing the processing shown herein, the execution of the code transforms the general purpose computer into a special purpose computer for executing the processing shown herein.

While the present invention has been described with reference to a certain embodiment and drawings, the present invention is not limited to the disclosed embodiment and those of ordinary skill in the art will understand that various changes may be made without departing from the scope of the present invention. Accordingly, the scope of the present invention should be defined by the claims rather than the described embodiment.

## Claims

1. A character inputting method for a character inputting apparatus which selectively displays one of a first keypad, a second keypad, and a third keypad, the character inputting method, which when accessed by a processor, causes the processor to execute steps comprising:
displaying (1001) the first keypad (602) in an area of a touch screen while hiding the second and third keypad;
sensing (1003) a touching of one of a plurality of regions partitioning the first keypad; sensing a dragging and releasing the touch in a position (603, 604) that is different from the touched region;
extracting a character associated with a region of the hidden second keypad corresponding to the touched region of the first keypad if the touch is released in a first predetermined region (603) outside the region of the touch screen where the first keypad (602) is displayed or extracting a character associated with a region of the hidden third keypad corresponding to the touched region of the first keypad if the touch is released in a second predetermined region (604) outside the region of the touch screen where the first keypad (602) is displayed; and
displaying (1007, 1009) the extracted character of the second or third keypad on the touch screen.

2. The character inputting method of claim 1, further comprising:
displaying a keypad switch button for displaying the hidden second keypad; and
hiding the first keypad and displaying the second keypad on the touch screen, in response to an activation of the keypad switch.

3. The character inputting method of claim 1, wherein the displaying of the first keypad comprises:
displaying a character of the first keypad and a corresponding character of the second keypad in each of the plurality of regions partitioning the first keypad.

4. The character inputting method of claim 1, further comprising:
displaying a character of the second keypad corresponding to the touch region of the first keypad as the touch is dragged outside the area of the first keypad.

5. The character inputting method of claim 1, further comprising:
sensing a touching of one of a plurality of regions partitioning the first keypad;
sensing a release of the touch;
determining a position of the release touch; and
displaying a character associated with the sensed touched region of the first keypad when the release touch is within the displayed first keypad.

6. A character inputting apparatus (100) comprising:
a touch screen (110) for displaying (1001) a first keypad (602) in an area of the touch screen while hiding a second and third keypad;
a storing unit (130) for storing characters of the first keypad, the second keypad, and the third keypad; and
a processor (120), for:
sensing (1003) a touching of one of a plurality of regions partitioning the first keypad;
sensing a dragging and releasing the touch in a position that is different from the touched region; extracting from the storing unit (130) a character associated with a region of the hidden second keypad corresponding to the touched region of the first keypad if the touch is released in a first predetermined region (603) outside the region of the touch screen where the first keypad (602) is displayed or extracting a character associated with a region of the hidden third keypad corresponding to the touched region of the first keypad if the touch is released in a second predetermined region (604) outside the region of the touch screen where the first keypad (602) is displayed; and
displaying (1007, 1009) the extracted character of the second or third keypad on the touch screen.

7. The character inputting apparatus (100) of claim 6, wherein the processor (120) comprises a user gesture sensing unit for, if sensing the release of the touch in the position that is different from the touched region, sensing the release of the touch outside a region of the touch screen where the first keypad is displayed.

8. The character inputting apparatus (100) of claim 6, wherein the processor (120) comprises:
a user gesture sensing unit (121) for sensing the release of the touch within a region where the first keypad is displayed;
a character extracting unit (122) for, in response to a user's gesture which releases the touch, extracting a character of the touch-released region of the first keypad; and
a character display unit (123) for displaying the extracted character of the first keypad on the touch screen.

9. The character inputting apparatus (100) of claim 6, wherein the touch screen (110) further displays a keypad switch button.

10. The character inputting apparatus of claim 6, wherein the touch screen displays a character associated with the first keypad and a character associated with the second keypad in each of the plurality of regions partitioning the first keypad.

11. The character inputting apparatus of claim 6, wherein the processor comprises:
a character display unit for displaying a character of a region of the second keypad on the touch screen, the region of the second keypad corresponding to the touched region of the first keypad when dragging the touch.

12. The character inputting apparatus of claim 6,
wherein the character associated with the region of the hidden second keypad is different from a character associated with the touched region of the first keypad.

13. A non-transitory computer-readable recording medium having recorded thereon a program for executing the character inputting method of claim 1.

14. The non-transitory computer-readable recording medium of claim 13, wherein the character associated with the region of the hidden second keypad is different from a character associated with the touched region of the first keypad.

## Patentansprüche

1. Zeicheneingabeverfahren für eine Zeicheneingabevorrichtung, die selektiv eines von einem ersten Tastenfeld, einem zweiten Tastenfeld und einem dritten Tastenfeld anzeigt, wobei das Zeicheneingabeverfahren, wenn von einem Prozessor auf dieses zugegriffen wird, den Prozessor veranlasst, Schritte auszuführen, die Folgendes umfassen:
Anzeigen (1001) des ersten Tastenfeldes (602) in einem Bereich eines Berührungsbildschirms, während das zweite und das dritte Tastenfeld verborgen werden;
Erfassen (1003) einer Berührung einer von einer Mehrzahl von Regionen, die das erste Tastenfeld aufteilen;
Erfassen eines Ziehens und Freigebens der Berührung in einer Position (603, 604), die eine andere als die berührte Region ist;
Extrahieren eines Zeichens, das einer Region des verborgenen zweiten Tastenfeldes zugeordnet ist, die der berührten Region des ersten Tastenfeldes entspricht, falls die Berührung in einer ersten vorbestimmten Region (603) außerhalb der Region (602) des Berührungsbildschirms freigegeben wird, in der das erste Tastenfeld (602) angezeigt wird, oder Extrahieren eines Zeichens, das einer Region des verborgenen dritten Tastenfeldes zugeordnet ist, die der berührten Region des ersten Tastenfeldes entspricht, falls die Berührung in einer zweiten vorbestimmten Region(604) außerhalb der Region (602) des Berührungsbildschirms freigegeben wird, in der das erste Tastenfeld (602) angezeigt wird; und
Anzeigen (1007, 1009) des extrahierten Zeichens des zweiten oder des dritten Tastenfeldes auf dem Berührungsbildschirm.

2. Zeicheneingabeverfahren nach Anspruch 1, ferner Folgendes umfassend:
Anzeigen einer Tastenfeld-Schalttaste zum Anzeigen des verborgenen zweiten Tastenfeldes; und
Verbergen des ersten Tastenfeldes und Anzeigen des zweiten Tastenfeldes auf dem Berührungsbildschirm als Reaktion auf eine Aktivierung des Tastfeldschalters.

3. Zeicheneingabeverfahren nach Anspruch 1, wobei das Anzeigen des ersten Tastenfeldes Folgendes umfasst:
Anzeigen eines Zeichens des ersten Tastenfeldes und eines entsprechenden Zeichens des zweiten Tastenfeldes in jeder der Mehrzahl von Regionen, die das erste Tastenfeld aufteilen.

4. Zeicheneingabeverfahren nach Anspruch 1, ferner Folgendes umfassend:
Anzeigen eines Zeichens des zweiten Tastenfeldes, das der Berührungsregion des ersten Tastenfeldes entspricht, wenn die Berührung aus dem Bereich des ersten Tastenfeldes gezogen wird.

5. Zeicheneingabeverfahren nach Anspruch 1, ferner Folgendes umfassend:
Erfassen einer Berührung einer von einer Mehrzahl von Regionen, die das erste Tastenfeld partitionieren;
Erfassen einer Freigabe der Berührung;
Bestimmen einer Position der Freigabeberührung; und
Anzeigen eines Zeichens, das der erfassten berührten Region des ersten Tastenfeldes zugeordnet ist, wenn sich die Freigabeberührung innerhalb des angezeigten ersten Tastenfeldes befindet.

6. Zeicheneingabevorrichtung (100), umfassend:
einen Berührungsbildschirm (110) zum Anzeigen (1001) eines ersten Tastenfeldes (602) in einem Bereich des Berührungsbildschirms, während ein zweites und ein drittes Tastenfeld verborgen werden;
eine Speichereinheit (130) zum Speichern von Zeichen des ersten Tastenfeldes, des zweiten Tastenfeldes und des dritten Tastenfeldes; und
ein Prozessor (120) zum:
Erfassen (1003) einer Berührung einer von einer Mehrzahl von Regionen, die das erste Tastenfeld aufteilen;
Erfassen eines Ziehens und Freigebens der Berührung in einer Position, die eine andere als die berührte Region ist;
Extrahieren, von der Speichereinheit (130), eines Zeichens, das einer Region des verborgenen zweiten Tastenfeldes zugeordnet ist, die der berührten Region des ersten Tastenfeldes entspricht, falls die Berührung in einer ersten vorbestimmten Region (603) außerhalb der Region des Berührungsbildschirms freigegeben wird, in der das erste Tastenfeld (602) angezeigt wird, oder Extrahieren eines Zeichens, das einer Region des verborgenen dritten Tastenfeldes zugeordnet ist, die der berührten Region des ersten Tastenfeldes entspricht, falls die Berührung in einer zweiten vorbestimmten Region(604) außerhalb der Region des Berührungsbildschirms freigegeben wird, in der das erste Tastenfeld angezeigt wird; und
Anzeigen (1007, 1009) des extrahierten Zeichens des zweiten oder des dritten Tastenfeldes auf dem Berührungsbildschirm.

7. Zeicheneingabevorrichtung (100) nach Anspruch 6, wobei der Prozessor (120) eine Benutzergesten-Erfassungseinheit umfasst, um bei Erfassung der Freigabe der Berührung in der Position, die eine andere als die berührte Region ist, die Freigabe der Berührung außerhalb einer Region des Berührungsbildschirms zu erfassen, in der das erste Tastenfeld angezeigt wird.

8. Zeicheneingabevorrichtung (100) nach Anspruch 6, wobei der Prozessor (120) Folgendes umfasst:
eine Benutzergesten-Erfassungseinheit (121) zum Erfassen der Freigabe der Berührung in einer Region, in der das erste Tastenfeld angezeigt wird;
eine Zeichenextraktionseinheit (122), um als Reaktion auf eine Benutzergeste, die die Berührung freigibt, ein Zeichen der Region mit freigegebener Berührung des ersten Tastenfeldes zu extrahieren; und
eine Zeichenanzeigeeinheit (123) zum Anzeigen des extrahierten Zeichens des ersten Tastenfeldes auf dem Berührungsbildschirm.

9. Zeicheneingabevorrichtung (100) nach Anspruch 6, wobei der Berührungsbildschirm (110) ferner eine Tastenfeld-Schalttaste anzeigt.

10. Zeicheneingabevorrichtung nach Anspruch 6, wobei der Berührungsbildschirm ein Zeichen anzeigt, das dem ersten Tastenfeld zugeordnet ist, und ein Zeichen, das dem zweiten Tastenfeld in jeder der Mehrzahl von Regionen zugeordnet ist, die das erste Tastenfeld aufteilen.

11. Zeicheneingabevorrichtung nach Anspruch 6, wobei der Prozessor Folgendes umfasst:
eine Zeichenanzeigeeinheit zum Anzeigen eines Zeichens einer Region des zweiten Tastenfeldes auf dem Berührungsbildschirm, wobei die Region des zweiten Tastenfeldes der berührten Region des ersten Tastenfeldes beim Ziehen der Berührung entspricht.

12. Zeicheneingabevorrichtung nach Anspruch 6,
wobei das Zeichen, das der Region des verdeckten zweiten Tastenfeldes zugeordnet ist, ein anderes ist als ein erstes Zeichen, das der berührten Region des ersten Tastenfeldes zugeordnet ist.

13. Nichtflüchtiges computerlesbares Aufzeichnungsmedium, auf dem ein Programm zum Ausführen des Zeicheneingabeverfahrens nach Anspruch 1 aufgezeichnet ist.

14. Nichtflüchtiges computerlesbares Aufzeichnungsmedium nach Anspruch 13, wobei das Zeichen, das der Region des verdeckten zweiten Tastenfeldes zugeordnet ist, ein anderes ist als ein erstes Zeichen, das der berührten Region des ersten Tastenfeldes zugeordnet ist.

## Revendications

1. Procédé d'entrée de caractère pour un appareil d'entrée de caractère qui affiche sélectivement l'un d'un premier clavier, d'un deuxième clavier et d'un troisième clavier, le procédé d'entrée de caractère qui, lorsqu'il est accédé par un processeur, amène le processeur à exécuter des étapes comprenant :
l'affichage (1001) du premier clavier (602) dans une zone d'un écran tactile tout en masquant le deuxième clavier et le troisième clavier ;
la détection (1003) d'un toucher de l'une d'une pluralité de régions partitionnant le premier clavier ;
la détection d'un glissement et d'un relâchement du toucher à une position (603, 604) qui est différente de la région touchée ;
l'extraction d'un caractère associé à une région du deuxième clavier masqué correspondant à la région touchée du premier clavier si le toucher est relâché dans une première région prédéterminée (603) à l'extérieur de la région de l'écran tactile où le premier clavier (602) est affiché ou l'extraction d'un caractère associé à une région du troisième clavier masqué correspondant à la région touchée du premier clavier si le toucher est relâché dans une deuxième région prédéterminée (604) à l'extérieur de la région de l'écran tactile où le premier clavier (602) est affiché ; et
l'affichage (1007, 1009) du caractère extrait du deuxième ou troisième clavier sur l'écran tactile.

2. Procédé d'entrée de caractère selon la revendication 1, comprenant en outre :
l'affichage d'un bouton commutateur de clavier pour afficher le deuxième clavier masqué ; et
le masquage du premier clavier et l'affichage du deuxième clavier sur l'écran tactile, en réponse à une activation du commutateur de clavier.

3. Procédé d'entrée de caractère selon la revendication 1, dans lequel l'affichage du premier clavier comprend :
l'affichage d'un caractère du premier clavier et d'un caractère correspondant du deuxième clavier dans chacune de la pluralité de régions partitionnant le premier clavier.

4. Procédé d'entrée de caractère selon la revendication 1, comprenant en outre :
l'affichage d'un caractère du deuxième clavier correspondant à la région touchée du premier clavier lors d'un glissement du toucher à l'extérieur de la zone du premier clavier.

5. Procédé d'entrée de caractère selon la revendication 1, comprenant en outre :
la détection d'un toucher de l'une d'une pluralité de régions partitionnant le premier clavier ;
la détection d'un relâchement du toucher ;
la détermination d'une position du toucher relâché ; et
l'affichage d'un caractère associé à la région touchée détectée du premier clavier lorsque le toucher relâché est à l'intérieur du premier clavier affiché.

6. Appareil d'entrée de caractère (100) comprenant :
un écran tactile (110) pour l'affichage (1001) d'un premier clavier (602) dans une zone de l'écran tactile tout en masquant un deuxième clavier et un troisième clavier ;
une unité de mémorisation (130) pour la mémorisation de caractères du premier clavier, du deuxième clavier et du troisième clavier ; et
un processeur (120) pour :
la détection (1003) d'un toucher de l'une d'une pluralité de régions partitionnant le premier clavier ;
la détection d'un glissement et d'un relâchement du toucher à une position qui est différente de la région touchée ;
l'extraction, de l'unité de mémorisation (130), d'un caractère associé à une région du deuxième clavier masqué correspondant à la région touchée du premier clavier si le toucher est relâché dans une première région prédéterminée (603) à l'extérieur de la région de l'écran tactile où le premier clavier (602) est affiché ou l'extraction d'un caractère associé à une région du troisième clavier masqué correspondant à la région touchée du premier clavier si le toucher est relâché dans une deuxième région prédéterminée (604) à l'extérieur de la région de l'écran tactile où le premier clavier (602) est affiché ; et
l'affichage (1007, 1009) du caractère extrait du deuxième ou troisième clavier sur l'écran tactile.

7. Appareil d'entrée de caractère (100) selon la revendication 6, dans lequel le processeur (120) comprend une unité de détection de geste d'utilisateur pour, s'il est détecté le relâchement du toucher à la position qui est différente de la région touchée, la détection du relâchement du toucher à l'extérieur d'une région de l'écran tactile où le premier clavier est affiché.

8. Appareil d'entrée de caractère (100) selon la revendication 6, dans lequel le processeur (120) comprend :
une unité de détection de geste d'utilisateur (121) pour la détection du relâchement du toucher à l'intérieur d'une région où le premier clavier est affiché ;
une unité d'extraction de caractère (122) pour, en réponse à un geste d'un utilisateur qui relâche le toucher, l'extraction d'un caractère de la région de toucher relâché du premier clavier ; et
une unité d'affichage de caractère (123) pour l'affichage du caractère extrait du premier clavier sur l'écran tactile.

9. Appareil d'entrée de caractère (100) selon la revendication 6, dans lequel l'écran tactile (110) affiche en outre un bouton commutateur de clavier.

10. Appareil d'entrée de caractère (100) selon la revendication 6, dans lequel l'écran tactile affiche un caractère associé au premier clavier et un caractère associé au deuxième clavier dans chacune de la pluralité de régions partitionnant le premier clavier.

11. Appareil d'entrée de caractère selon la revendication 6, dans lequel le processeur comprend :
une unité d'affichage de caractère pour l'affichage d'un caractère d'une région du deuxième clavier sur l'écran tactile, la région du deuxième clavier correspondant à la région touchée du premier clavier lors d'un glissement du toucher.

12. Appareil d'entrée de caractère selon la revendication 6,
dans lequel le caractère associé à la région du deuxième clavier masqué est différent d'un caractère associé à la région touchée du premier clavier.

13. Support d'enregistrement lisible par ordinateur non transitoire sur lequel est enregistré un programme pour exécuter le procédé d'entrée de caractère de la revendication 1.

14. Support d'enregistrement lisible par ordinateur non transitoire selon la revendication 13, dans lequel le caractère associé à la région du deuxième clavier masqué est différent d'un caractère associé à la région touchée du premier clavier.
